# EUROPEAN PATENT APPLICATION

(11) **EP 2 752 808 A1**
(43) Date of publication of application: **09.07.2014**
(21) Application number: 11871527.5
(22) Date of filing: 30.08.2011
(51) Int. Cl.: G06Q 50/00, A01G 7/00

(54) **IMAGING DEVICE, WORK SUPPORT PROGRAM, INFORMATION PROVISION METHOD, AND INFORMATION PROVISION PROGRAM**

(71) Applicant: Fujitsu Limited, Kawasaki-shi, Kanagawa 211-8588 (JP)
(72) Inventor: IBAMOTO, Takehiko, Kawasaki-shi Kanagawa 211-8588 (JP)
(74) Representative: HOFFMANN EITLE
(86) International application number: PCT/JP2011/069666
(87) International publication number: WO 2013/030964

(57) **Abstract**

A photographing apparatus (101) transmits apparatus information (130) of the apparatus to an information providing apparatus (102). Based on the apparatus information (130) from the photographing apparatus (101), the information providing apparatus (102) extracts from a reference scale DB (120), reference scale information that indicates a dimension to be used as a comparison reference of a given crop to be photographed by the photographing apparatus (101) and transmits the reference scale information to the photographing apparatus (101). Based on a photographing condition at the time of photographing of the given crop and the reference scale information (140) from the information providing apparatus (102), the photographing apparatus (101) creates an image picture representative of the dimension to be used as the comparison reference of the given crop on a photographed image taken by a camera (110). The photographing apparatus (101) outputs the photographed image taken by the camera (110) and the created image picture in a correlated manner.

## Description

### TECHNICAL FIELD

The present invention is related to a photographing apparatus, an information providing method, and a computer product.

### BACKGROUND ART

A photograph of a crop is conventionally used as material for comprehending the growth state of the crop cultivated in a farm field. For example, a manager of a large-scale farm understands the growth state of a crop from a photograph taken by an employee in the field and thereby, determines a suitable measure for the growth state of the crop.

To facilitate comprehension of the growth state of a crop from a photograph, for example, a ruler or a mobile telephone is placed next to a crop and photographed as a reference object for size comparison of the crop. However, when taking a photograph of a crop such as a paddy rice plant in a paddy field or fruit growing on a tree, it may be difficult for a photographer to approach the crop and place a reference object next to the crop for photographing.

For example, a related technology includes a camera that measures the distance between the lens and the object in focus and calculates a reference measure, for example vertical and horizontal measures, in an object plane from measured data and angle-of-view data of the lens (see, e.g.,

Patent Document 1).

Patent Document 1: Japanese Laid-Open Patent Publication No. S63-155042

### DISCLOSURE OF INVENTION

### PROBLEM TO BE SOLVED BY THE INVENTION

Nonetheless, the conventional technique still has a problem in that the growth state of a crop is difficult to comprehend from a photograph taken on site. For example, if the growth state of a crop is comprehended from a photograph with vertical and horizontal measures of an object plane displayed, a worker relies on the vertical and horizontal measures of the object plane to visually determine the actual size of the file crop. The standard size of crops differs according to the type of crop. Therefore, the worker must know the standard size of the crop before determining the difference from the actual size visually determined from the photograph, causing problems of a burden on workers and an increase in human error.

To solve the problems related to the conventional technologies above, an object of the present invention is to provide a photographing apparatus, an information providing method, and a computer product that can facilitate higher work efficiency.

### MEANS FOR SOLVING PROBLEM

To solve the problems above and achieve an object, according to one aspect of the present invention, a photographing apparatus and a work support program are proposed that acquire dimension information that corresponds to a type of a given crop to be photographed, from a storage unit that stores for each type of crop, dimension information that indicates a dimension to be used as a comparison reference for the crop; create based on a photographing condition at the time of photographing of the given crop by a photographing unit and the acquired dimension information, a graphic image representative of the dimension to be used as the comparison reference for the given crop, on a photographed image taken by the photographing unit; and output the photographed image taken by the photographing unit and the created graphic image in a correlated manner.

Further, to solve the problems above and achieve an object, according to one aspect of the present invention, an information providing method and an information providing program are proposed that receive from a photographing apparatus, apparatus information that identifies the photographing apparatus; extract based on the received apparatus information and from a storage unit that stores for each type of crop, dimension information that indicates a dimension to be used as a comparison reference of the crop, dimension information that corresponds to a type of a given crop that is to be photographed by the photographing apparatus; and transmit the extracted dimension information to the photographing apparatus.

### EFFECT OF THE INVENTION

An aspect of the present invention enables higher work efficiency to be achieved.

### BRIEF DESCRIPTION OF DRAWINGS

FIG. 1 is an explanatory view of an example of a work support method according to a first embodiment;
FIG. 2 is an explanatory view of a system configuration example of a work support system 200 according to the first embodiment;
FIG. 3 is a block diagram of a hardware configuration example of a photographing apparatus 101;
FIG. 4 is a block diagram of an example of a hardware configuration of an information providing apparatus 102 according to a second embodiment;
FIG. 5 is an explanatory view of an example of the contents of a reference scale DB 120;
FIG. 6 is an explanatory view of an example of the contents of a farm field DB 220;
FIG. 7 is an explanatory view of an example of the contents of a photographed image DB 230;
FIG. 8 is a block diagram of a functional configuration of the photographing apparatus 101 according to the first embodiment;
FIG. 9 is an explanatory view (part one) of a positional relationship between a camera 110 and a photographing object;
FIG. 10 is an explanatory view (part two) of a positional relationship between the camera 110 and a photographing object;
FIG. 11 is an explanatory view (part one) of an example of a screen on a display 305;
FIG. 12 is an explanatory view (part two) of an example of a screen on the display 305;
FIG. 13 is an explanatory view (part three) of an example of a screen on the display 305;
FIG. 14 is an explanatory view of an example of a changing of a display position E of an image picture I;
FIG. 15 is a block diagram of a functional configuration of the information providing apparatus 102 according to the first embodiment;
FIG. 16 is an explanatory view of a screen example of a patrolling result list screen 1600;
FIG. 17 is a flowchart of an example of a work support process procedure of the photographing apparatus 101 according to the first embodiment;
FIG. 18 is a flowchart of an example of a process procedure of a image picture creating process;
FIG. 19 is a flowchart of an example of an information providing process procedure of the information providing apparatus 102 according to the first embodiment;
FIG. 20 is a flowchart of an example of a process procedure of a reference scale information extracting process;
FIG. 21 is a block diagram of a functional configuration of the photographing apparatus 101 according to a second embodiment; and
FIG. 22 is a flowchart of an example of the work support process procedure of the photographing apparatus 101 according to the second embodiment.

### BEST MODE(S) FOR CARRYING OUT THE INVENTION

Embodiments of a photographing apparatus, a work support program, an information providing method, and an information providing program according to the present invention will be described in detail with reference to the accompanying drawings.

### (First Embodiment)

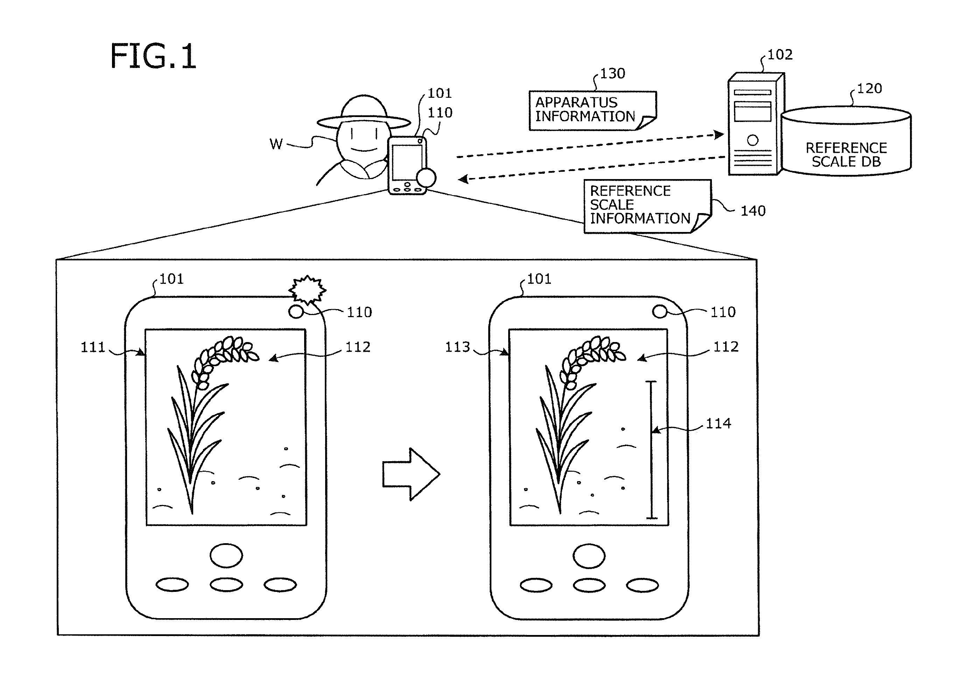

FIG. 1 is an explanatory view of an example of a work support method according to a first embodiment. In FIG. 1, a photographing apparatus 101 is a portable computer used by a worker W. The photographing apparatus 101 has a camera 110 that photographs objects.

The worker W is a person engaged in farm work. The worker W photographs crops cultivated in farm fields as a part of the farm work. The farm fields are fields, vegetable gardens, etc., for cultivating and growing crops. The crops are crops such as grains and vegetables grown in fields and the like, for example.

An information providing apparatus 102 is a computer that has a reference scale database (DB) 120 and provides reference scale information to the photographing apparatus 101. The reference scale DB 120 is a database storing for each crop type, reference scale information that indicates a dimension to be used as a comparison reference for the crop.

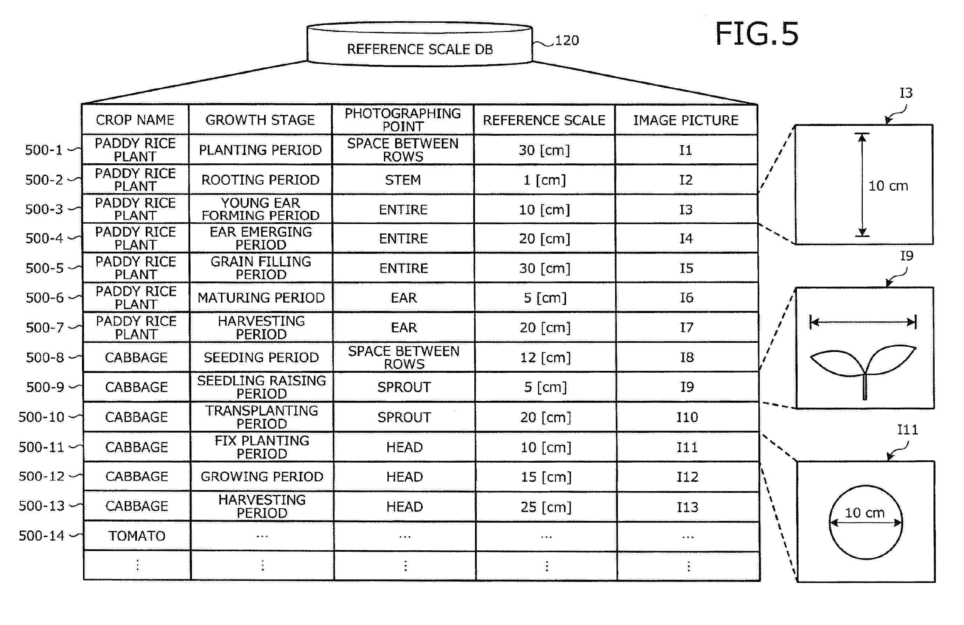

The crop type is information for classifying the crop. The crop type is classified by using an item, a variety, and a cropping method of the crop, for example. The reference scale information is information that indicates a size, for example, a standard size, related to a portion or the entire agricultural item and is used as a comparison reference for comprehending the growth state. For example, the reference scale information indicates the height of an entire paddy rice plant, the thickness of a stem of the paddy rice plant, the size of a vegetable or a fruit, etc. The contents of the reference scale DB 120 will be described later with reference to FIG. 5.

In this embodiment, a graphic image representative of a standard size of a crop being cultivated is created and embedded in a photographed image obtained by photographing the crop. As a result, when the growth state is determined from the photographed image, the current growth state is easily comprehended based on the size of the graphic image, thereby reducing the work burden and human errors of a worker.

An example of the work support method according to the first embodiment will be described. In the description of the example, a "paddy rice plant" cultivated in a farm field is photographed as a given crop to be photographed.
(1) The photographing apparatus 101 transmits apparatus information 130 identifying itself to the information providing apparatus 102. The apparatus information 130 is information that includes an apparatus ID (identification) of the photographing apparatus 101, a worker ID of the worker W, and positional information of the photographing apparatus 101, for example.
(2) The information providing apparatus 102 extracts reference scale information 140 corresponding to the type of the given crop to be photographed by the photographing apparatus 101, from the reference scale DB 120 and based on the apparatus information 130 from the photographing apparatus 101. The type of the given crop is identified from, for example, the apparatus ID, the worker ID, and the positional information of the photographing apparatus 101 included in the apparatus information 130.
(3) The information providing apparatus 102 transmits to the photographing apparatus 101, the reference scale information 140 extracted from the reference scale DB 120. The reference scale information 140 is information that indicates a standard dimension of the given crop and corresponds to the type of the given crop.
(4) The photographing apparatus 101 creates a graphic image representative of the standard dimension of the given crop on a photographed image taken by the camera 110, based on a photographing condition of photographing of the given crop by the camera 110 and the reference scale information 140 from the information providing apparatus 102. The graphic image represents the standard dimension of the given crop on a photographed image.

For example, the graphic image is a line segment, a circle, a polygon, etc., representative of the standard dimension of the given crop. In particular, for example, the graphic image may be an image picture representative of a graphic like a scale such as a ruler or an image picture representative of a graphic imitating a shape of the given object. The graphic image may include numerical information that indicates the standard dimension of the given crop.

The photographing condition includes a photographing distance from the camera 110 to the given crop, a focal distance of the camera 110, an angle of view, an aperture, a screen size of the photographed image, etc. For example, first, the photographing apparatus 101 calculates a photographing magnification of the camera 110 based on the photographing condition of photographing of the given crop.

The photographing magnification is a ratio between the size of the object on a photographed image and the actual size of the object, for example. In particular, for example, the size of the object on the photographed image is the size of an image taken by a lens of the camera 110. The photographing apparatus 101 calculates a standard dimension of the given crop on the photographed image based on the standard dimension of the given crop identified from the reference scale information 140 and the calculated photographing magnification.

The photographing apparatus 101 creates a graphic image representative of the standard dimension of the given crop on the photographed image, based on the calculated calculation result. In the example of FIG. 1, a graphic image 114 is created that represents a standard size of a "paddy rice plant" on the photographed image taken by the camera 110. The graphic image 114 is a line segment representative of the standard size of the "paddy rice plant".
(5) The photographing apparatus 101 outputs in a correlated manner, the photographed image taken by the camera 110 and the created graphic image. In the example of FIG. 1, as a result of photographing a paddy rice plant 112 displayed on a finder screen 111 of the camera 110, a photographed image 113 and the graphic image 114 are output in a correlated manner.

With the work support method according to the first embodiment as described above, a graphic image representative of a standard dimension of a given crop can be correlated and output with a photographed image taken by the camera 110. As a result, the graphic image representative of the standard dimension of the given crop can be superimposed and displayed on the photographed image and, when the photographed image is checked, the growth state of the given crop can be comprehended based on the size of the graphic image on the photographed image.

In the example of FIG. 1, it can be comprehended that the growth state of the paddy rice plant 112 is better than the standard growth state, based on the size of the graphic image 114 on the photographed image 113. As described above, the graphic image representative of the standard dimension of the given crop can be embedded on the photographed image to facilitate the comprehension of the growth state of the given crop, thereby reducing the work burden and human errors of a checker

### (System Configuration Example of Work Support System 200)

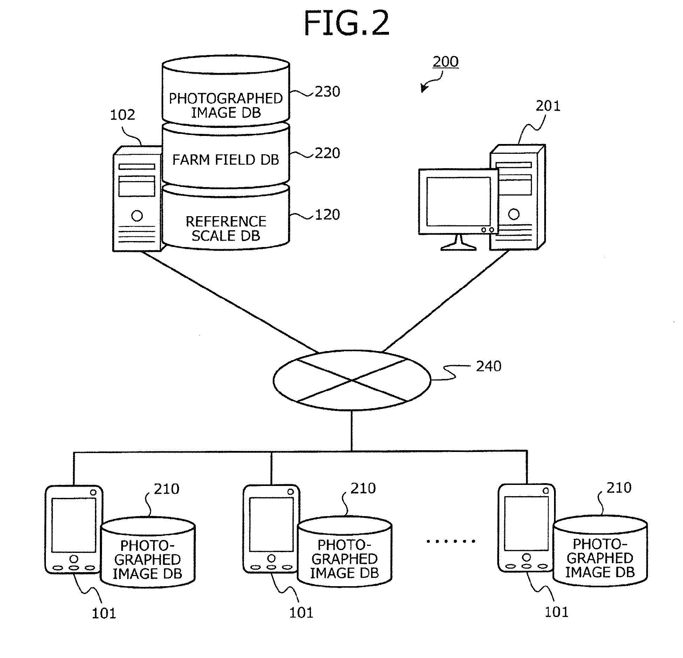

A system configuration example of a work support system 200 according to the first embodiment will be described. FIG. 2 is an explanatory view of the system configuration example of the work support system 200 according to the first embodiment. In FIG. 2, the work support system 200 includes multiple photographing apparatuses 101, the information providing apparatus 102, and a client apparatus 201. In FIG. 2, by way of example, the three photographing apparatuses 101 are depicted.

The work support system 200 has the photographing apparatuses 101, the information providing apparatus 102, and the client apparatus 201 connected through a wired or wireless network 240. The network 240 is a local area network (LAN) or a wide area network (WAN), for example.

The photographing apparatuses 101 are portable computers having photographed image DBs 210 and are used by respective workers W engaged in farm work. The photographing apparatuses 101 are applicable to digital cameras, mobile telephones, personal digital assistants (PDAs), and smartphones, for example.

The information providing apparatus 102 is a computer that has the reference scale DB 120, a farm field DB 220, and a photographed image DB 230 and provides the reference scale information to the photographing apparatuses 101 used by the respective workers W. The information providing apparatus 102 can centrally manage photographed images taken by the photographing apparatuses 101 used by the respective workers W.

The information providing apparatus 102 is applicable to a server included in a cloud computing system and a personal computer (PC) or a notebook PC used by a manager of a farm, for example. The contents of the various DBs 120, 220, and 230 will be described later with reference to FIGs. 5 to 7.

The client apparatus 201 is a computer having a function of accessing the information providing apparatus 102 and browsing the photographed images stored in the photographed image DB 230. The client apparatus 201 is a PC and a notebook PC used by a manager and employees of a farm, etc.

### (Hardware Configuration Example of the Photographing Apparatus 101)

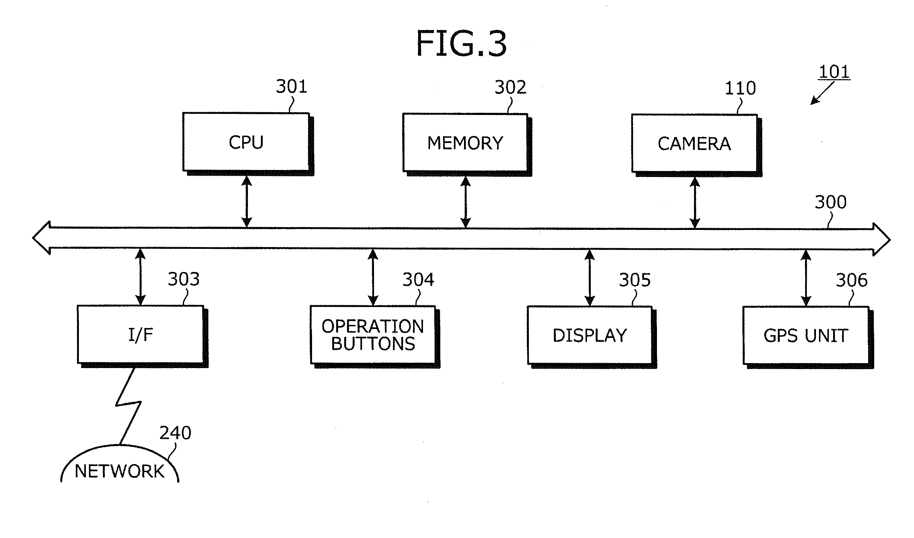

FIG. 3 is a block diagram of a hardware configuration example of the photographing apparatus 101. As depicted in FIG. 3, the photographing apparatus 101 includes a central processing unit (CPU) 301, memory 302, an interface (I/F) 303, operation buttons 304, a display 305, a global positioning system (GPS) unit 306, and the camera 110, respectively connected by a bus 300.

The CPU 301 governs overall control of the photographing apparatus 101. The memory 302 includes read-only memory (ROM), random access memory (RAM), flash ROM, and the like. ROM and flash ROM, for example, store various types of programs. RAM is used as a work area of the CPU 301.

The I/F 303 is connected to the network 240 via a communication line, and is connected to other apparatuses such as the information providing apparatus 102 and the client apparatus 201 through the network 240. The I/F 303 administers an internal interface with the network 240, and controls the input and output of data with respect to external apparatuses.

The operation buttons 304 perform data input. The operation buttons 304 may be provided as keys for inputting text, numerals, various instructions, and the like, and further may be provided as a touch-panel-type input pad or numeric keypad, etc.

The display 305 displays, for example, data such as text, images, functional information, etc., in addition to a cursor, icons, and/or tool boxes. The display 305 may include a touch-panel-type input pad or numeric keypad as the operation buttons 304. A liquid crystal display (LCD) may be adopted as the display 305.

The GPS unit 306 receives signals from GPS satellites and outputs position information of the photographing apparatus 101. Position information of the photographing apparatus 101 is, for example, information that identifies a single point on earth such as by latitude and longitude. Further, the photographing apparatus 101 may correct the position information output from the GPS unit 306, by a differential GPS (DGPS) scheme.

The camera 110 takes still photographs and moving pictures, and outputs each as image data. Images captured by the camera 110, for example, are stored to the memory 302 as image data. The camera 110 may be an infrared camera that enables photographing at night. In addition to the above components, the photographing apparatus 101 may further include various sensors such as a gyroscope, a three-axis accelerometer, and the like.

### (Hardware Configuration Example of the Information Providing Apparatus 102 Etc.)

A hardware configuration example of the information providing apparatus 102 and the client apparatus 201 depicted in FIG. 2 will be described. In this description, the information providing apparatus 102 and the client apparatus 201 will simply be referred to as the "information providing apparatus 102 etc."

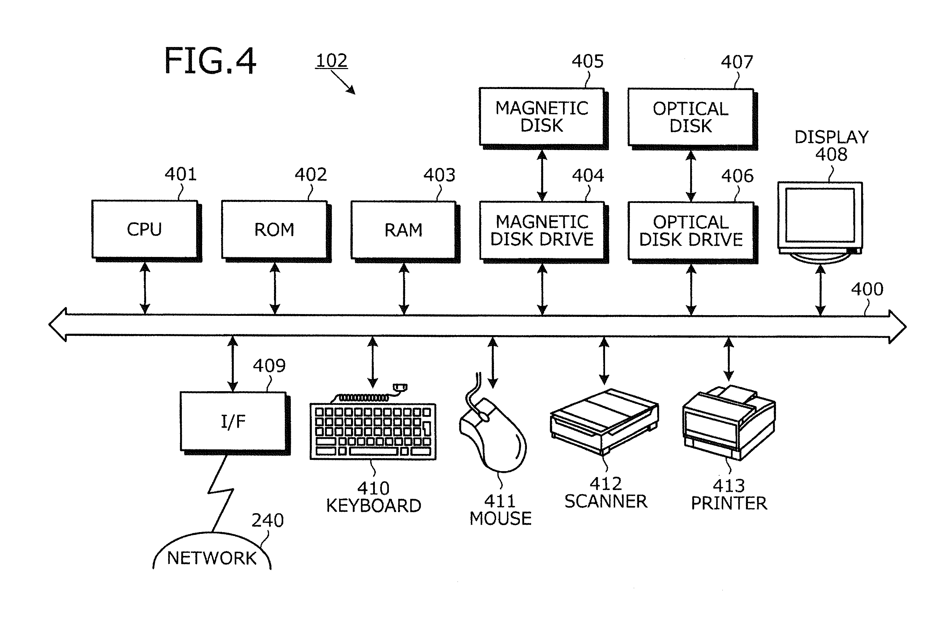

FIG. 4 is a block diagram of an example of a hardware configuration of the information providing apparatus 102 according to the second embodiment. In FIG. 4, the information providing apparatus 102 includes a central processing unit (CPU) 401, read-only memory (ROM) 402, random access memory (RAM) 403, a magnetic disk drive 404, a magnetic disk 405, an optical disk drive 406, an optical disk 407, a display 408, an interface (I/F) 409, a keyboard 410, a mouse 411, a scanner 412, and a printer 413, respectively connected by a bus 400.

The CPU 401 governs overall control of the information providing apparatus 102. The ROM 402 stores programs such as a boot program. The RAM 403 is used as a work area of the CPU 401. The magnetic disk drive 404, under the control of the CPU 401, controls the reading and writing of data with respect to the magnetic disk 405. The magnetic disk 405 stores data written thereto under the control of the magnetic disk drive 404.

The optical disk drive 406, under the control of the CPU 401, controls the reading and writing of data with respect to the optical disk 407. The optical disk 407 stores data written thereto under the control of the optical disk drive 406, the data stored on the optical disk 407 being read out by a computer.

The display 408 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 408.

The I/F 409 is connected to the network 240 via a communication line, and is further connected to external apparatuses via the network 240. The I/F 409 administers an internal interface with the network 240, and controls the input and output of data with respect to external apparatuses. For example, a modem or a LAN adaptor may be employed as the I/F 409.

The keyboard 410 includes, for example, keys for inputting letters, numerals, and various instructions and performs the input of data. Alternatively, a touch-panel-type input pad or numeric keypad, etc. may be adopted. The mouse 411 is used to move the cursor, select a region, or move and change the size of windows. A track ball or a joy stick may be adopted provided each respectively has a function similar to a pointing device.

The scanner 412 optically reads an image and takes in the image data into the information providing apparatus 102. The scanner 412 may have an optical character reader (OCR) function as well. The printer 413 prints image data and text data. The printer 413 may be, for example, a laser printer or an ink jet printer.

The configuration of the information providing apparatus 102 may omit the optical disk drive 406, the optical disk 407, the display 408, the keyboard 410, the mouse 411, the scanner 412, and/or the printer 413.

### (Contents of the Various DBs 120, 220, and 230)

The contents of the various DBs 120, 220, and 230 included in the information providing apparatus 102 will be described. The various DBs 120, 220, and 230 are implemented by a storage unit such as the RAM 403, the magnetic disk 405, and the optical disk 407 of the information providing apparatus 102 depicted in FIG. 4, for example.

### <Contents of the Reference Scale DB 120>

FIG. 5 is an explanatory view of an example of the contents of the reference scale DB 120. In FIG. 5, the reference scale DB 120 has fields for crop names, growth stages, photographing points, reference scales, and image pictures. By setting information in the fields, reference scale information (e.g., reference scale information 500-1 to 500-14) is stored as a record for each combination of a crop name and a growth stage.

The crop name is a name of a crop. The crop name represents a type of the crop. The growth stage is information that indicates a growth phase of a crop. For example, the growth stages of paddy rice plants include a planting period, a rooting period, a young ear forming period, an ear emerging period, a grain filling period, a maturing period, a harvesting period, etc. For example, the growth stages of cabbage include a seeding period, a seedling raising period, a transplanting period, a fix planting period, a growing period, a harvesting period, etc.

The photographing point represents a location to be focused at the time of photographing of a crop. In this example, a photographing point is described for each combination of a crop name and a growth stage of a crop. For example, in the case of a paddy rice plant, the rooting period immediately after the planting involves checking of whether a plant has taken root based on whether the thickness of the stem projecting from a water surface reaches a predetermined thickness. Therefore, the photographing point of the crop name "paddy rice plant" in the growth stage "rooting period" is the "stem". In the season in which ears should emerge, it is checked whether an entire paddy rice plant has grown to 50 to 60 [cm] in height and whether an ear has started ripening. Therefore, the photographing point of the crop name "paddy rice plant" in the growth stage "maturing period" is "entirety" or an "ear" .

The reference scale represents a standard dimension of the photographing point. The dimension is a standard height, length, thickness, diameter, etc., corresponding to each photographing point. The image picture is image data of a graphic image representative of the standard dimension of the photographing point.

For example, an image picture I3 is a graphic image representative of the standard dimension of the crop name "paddy rice plant" in the growth stage "young ear forming period" at the photographing point "entirety". The image picture I3 is a graphic image like a ruler representative of the standard dimension of the photographing point "entirety". An image picture I9 is a graphic representative of the standard dimension of the crop name "cabbage" in the growth stage "seedling raising period" at a photographing point "sprout". The image picture I9 is a graphic image imitating a shape of the photographing point "sprout". An image picture I11 is a graphic representative of the standard dimension of the crop name "cabbage" in the growth stage "fix planting period" at the photographing point "head". The image picture I11 is a graphic image imitating a shape of the photographing point "head". The "head" refers to a headed cabbage.

The image picture may have numerical information that indicates the standard dimension of the photographing point displayed as in the image pictures I3 and I11, for example. The image picture includes information that indicates what portion of the image picture the standard dimension of the photographing point represents. The information corresponds to arrows in both directions depicted in FIG.5.

The image picture may have positional information added to indicate a display position of the image picture, for example, center, lower right, and upper right, on a finder screen or a photograph image of the camera 110. The finder screen is a screen or a peep window used for determining a photographing range and a composition of a photographed image, and for focusing.

For example, since the photographing point of the crop name "paddy rice plant" in the growth stage "rooting period" is the thickness of the "stem" projecting from the water surface, a display position of an image picture I2 representative of a horizontally long graphic may be set to the center of the screen. Since the photographing point of the crop name "paddy rice plant" in the growth stage "ear emerging period" is the "entirety", a display position of an image picture I4 representative of a vertically long graphic may be set slightly aside from the center of the screen.

Although the reference scale information is registered for each combination of a crop name and a growth stage in the example described above, this is not a limitation. For example, if multiple locations should be focused at the time of photographing for the same crop name in the same growth stage, the reference scale information may be registered for each combination of a crop name, a growth stage, and a photographing point.

For example, in the case of the maturing period of the paddy rice plant, as described above, in the season in which ears should emerge, it is checked whether the entire paddy rice plant has grown to 50 to 60 [cm] in height and whether an ear has started ripening. In this case, the reference scale information of the photographing points "ear" and "entirety" may be registered for the growth stage "maturing period" of the crop name "paddy rice plant"' in the reference scale DB 120.

### <Contents of the Farm Field DB 220>

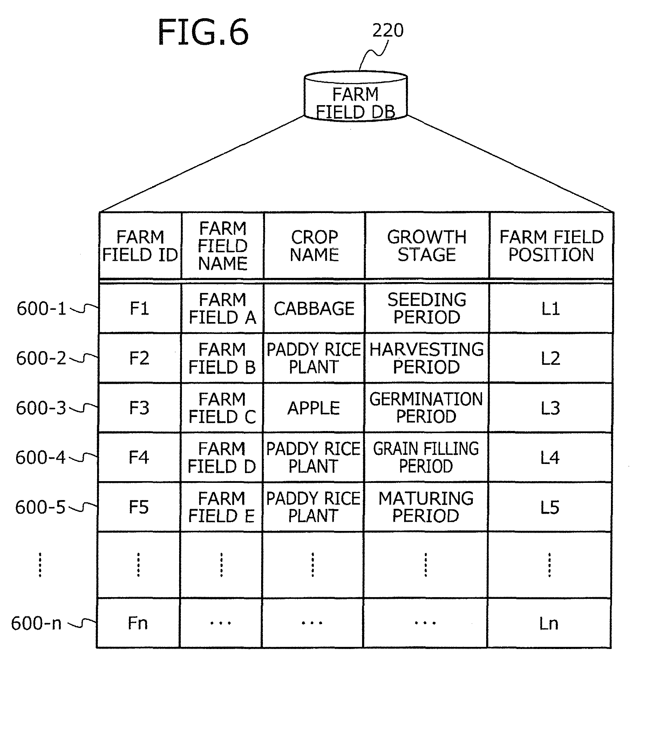

FIG. 6 is an explanatory view of an example of the contents of the farm field DB 220. In FIG. 6, the farm field DB 220 has fields for farm field IDs, farm field names, crop names, growth stages, and farm field positions. By setting information in the fields, farm field information 600-1 to 600-n of farm fields F1 to Fn are stored as records.

The farm field ID is an identifier uniquely identifying the farm fields F1 to Fn scattered in various places. The farm fields F1 to Fn are farm fields managed by a manager of a farm using the client apparatus 201, for example. An arbitrary farm field out of the farm fields F1 to Fn will hereinafter be referred to as a "farm field Fi" (i=1, 2, ..., n).

The farm field name is the name of the farm field Fi. The crop name is the name of a crop cultivated in the farm field Fi. The growth stage is information that indicates the growth phase of a crop cultivated in the farm field Fi. The farm field position is positional information of the farm field Fi. The farm field position is information specifying the center of mass position of the farm field Fi or an area such as a north end position, a west end position, an east end position, and a south end position of the farm field Fi mapped on a map.

For example, the farm field information 600-1 indicates the farm field name "farm field A", the crop name "cabbage", the growth stage "seeding period", and the farm field position "L1"' of the farm field F1. For example, the farm field DB 220 may include work schedule information that indicates a work schedule of farm work performed in the farm field Fi. For example, the work schedule information is information that indicates a work scheduled date, a work scheduled time, work scheduled details, a worker, etc., of the farm work performed in the farm field Fi.

### <Contents of the Photographed Image DB 230>

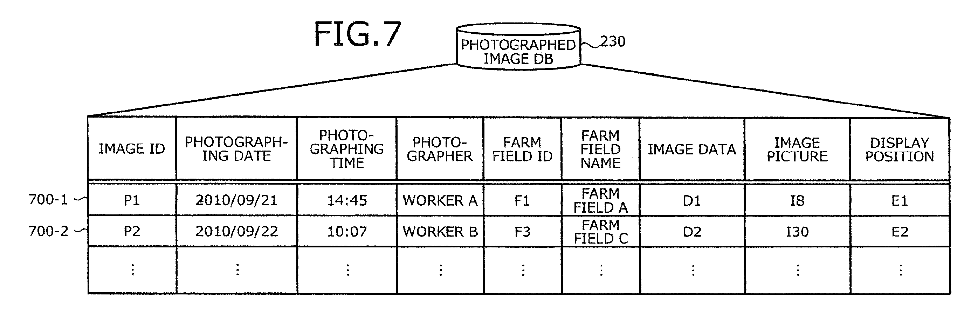

FIG. 7 is an explanatory view of an example of the contents of the photographed image DB 230. In FIG. 7, the photographed image DB 230 has fields for image IDs, photographing dates, photographing times, photographers, farm field IDs, farm field names, image data, image pictures, and display positions. By setting information in the fields, photographing information (e.g., photographing information 700-1, 700-2) is stored as a record for each photographed image.

The image ID is an identifier uniquely identifying a photographed image taken by the photographing apparatus 101. The photographing date is the date when the photographed image is taken. The photographing time is the time when the photographed image is taken. The photographer is information, for example, a worker ID, identifying the worker W taking the photographed image. The farm field ID is an identifier of the farm field Fi. The farm field name is a name of the farm field Fi.

The image data is image data of the photographed image. The image picture is a graphic image correlated with the photographed image and representative of a standard dimension of the photographing point on the photographed image. The display position is information that indicates a display position of the image picture on the photographed image. For example, the display position is the center of mass position of the image picture in an orthogonal coordinate system consisting of the X-axis and the Y-axis of the photographed image.

For example, the photographing information 700-1 indicates the photographing date "2010/9/21", the photographing time "14:45", the photographer "worker A", the farm field ID "F1" , the farm field name "farm field A", the image data "D1", the image picture "I8", and the display position "E1" of the photographed image P1. The photographing information may include positional information (i.e., photographing spot) of the photographing apparatus 101 at the time of photographing of the photographed image.

The contents of the photographed image DB 210 included in the photographing apparatus 101 are the same as the photographed image DB 230 included in the information providing apparatus 102 and therefore, will not be depicted and described. The photographed image DB 210 is implemented by the memory 302 of the photographing apparatus 101 depicted in FIG. 3, for example.

### (Functional Configuration Example of the Photographing Apparatus 101)

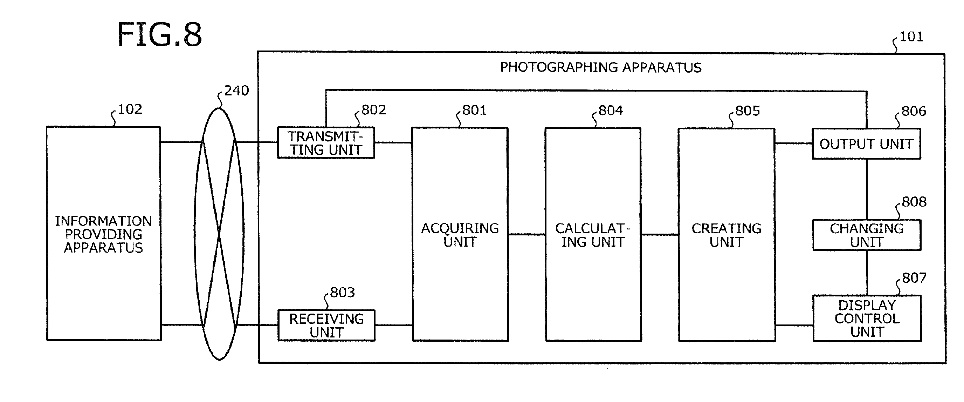

FIG. 8 is a block diagram of a functional configuration of the photographing apparatus 101 according to the first embodiment. In FIG. 8, the photographing apparatus 101 includes an acquiring unit 801, a transmitting unit 802, a receiving unit 803, a calculating unit 804, a creating unit 805, an output unit 806, a display control unit 807, and a changing unit 808. The acquiring unit 801 to the changing unit 808 are functions acting as a control unit and, for example, are implemented by causing the CPU 301 to execute a program stored in the memory 302 depicted in FIG. 3 or by the I/F 303. The process results of the functional units are stored in the memory 302, for example.

The acquiring unit 801 has a function of acquiring the apparatus information of the apparatus thereof. For example, the apparatus information is information that includes the apparatus ID of the photographing apparatus, the worker ID of the worker W using the photographing apparatus, and the positional information of the photographing apparatus. For example, the apparatus ID of the photographing apparatus and the worker ID of the worker W are stored in the memory 302. For example, the positional information of the photographing apparatus is acquired by the GPS unit 306 depicted in FIG. 3. The positional information of the photographing apparatus may be corrected positional information obtained by correcting the positional information output from the GPS unit 306 by DGPS.

The apparatus information of the photographing apparatus thereof may include information that indicates the farm field name and the farm field ID of the given farm field to be photographed, the crop name and the growth stage of the given crop, etc. For example, the farm field name and the farm field ID of the given farm field and the crop name and the growth stage of the given crop are directly input to the photographing apparatus 101 through operation input by the worker W using the operation buttons 304 depicted in FIG. 3.

The transmitting unit 802 has a function of transmitting the apparatus information to the information providing apparatus 102. For example, when the camera 110 is activated, the transmitting unit 802 transmits the apparatus information through the network 240 to the information providing apparatus 102.

The receiving unit 803 has a function of receiving from the information providing apparatus 102 and consequent to transmission of the apparatus information to the information providing apparatus 102, the reference scale information that indicates the standard dimension of the given crop to be photographed. Reference scale information for one standard dimension may hereinafter be referred to as "reference scale information SD" as a representative of the reference scale information.

For example, the receiving unit 803 receives through the network 240 from the information providing apparatus 102, the reference scale information SD corresponding to a combination of the crop name and the growth stage of the given crop, among a reference scale information group in the reference scale DB 120 depicted in FIG. 5. To the reference scale information SD, the farm field ID or the farm field name of the given farm field to be photographed may be added.

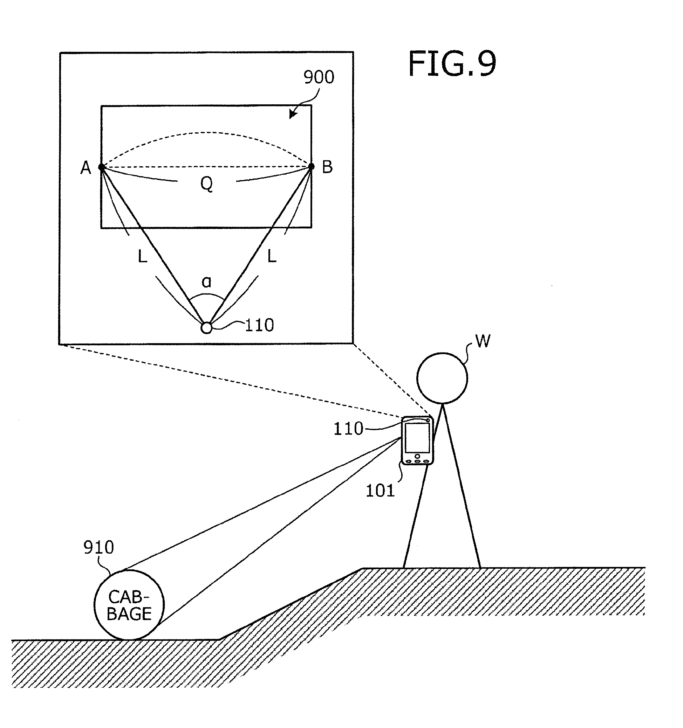

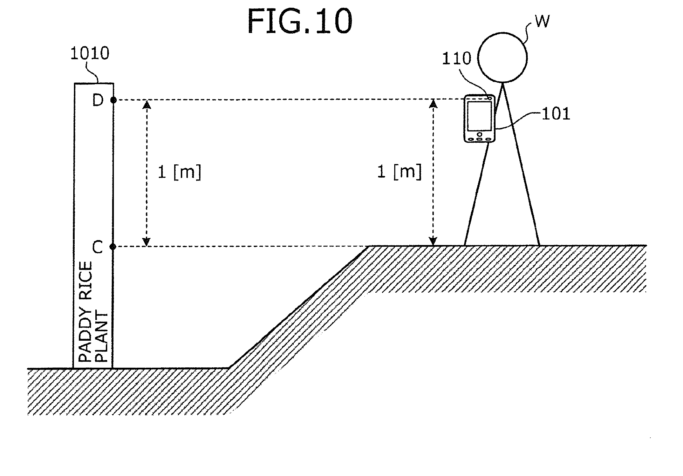

The calculating unit 804 has a function of calculating the standard dimension of the given crop on the photographed image taken by the camera 110. For example, the calculating unit 804 calculates the standard dimension of the given crop on the photographed image, based on the photographing condition at the time of photographing of the given crop by the camera 110 and the reference scale information SD. Specific process details of the calculating unit 804 will be described later with reference to FIGs. 9 and 10.

The creating unit 805 has a function of creating an image picture representative of the standard dimension of the given crop on the photographed image, based on the calculated calculation result. For example, the creating unit 805 may create a graphic image, such as a line segment, a circle, and a polygon representative of the calculated dimension, as the image picture representative of the standard dimension of the given crop on the photographed image.

The creating unit 805 may modify, for example, enlarge or reduce, the image picture included in the reference scale information SD according to the calculated dimension, thereby creating the image picture representative of the standard dimension of the given crop on the photographed image.

The output unit 806 has a function of outputting the photographed image taken by the camera 110 and the created image picture, in a correlated manner. For example, the output unit 806 may transmit to the information providing apparatus 102, the photographing information that indicates the photographed image and the image picture, in a correlated manner. Alternatively, the output unit 806 may register into the photographed image DB 210, the photographing information that indicates the photographed image and the image picture, in a correlated manner.

The photographing information may include the photographing date, the worker ID of the worker W that is the photographer using the photographing apparatus 101, the farm field ID or the farm field name of the given farm field, the crop name and the growth stage of the given crop, etc. The farm field ID or the farm field name of the given farm field is added to the reference scale information SD, for example.

The display control unit 807 has a function of superimposing and displaying the photographed image and the image picture on the display 305 as a result of photographing of the photographed image by the camera 110. For example, the display control unit 807 displays the photographed image on the display 305 while superimposing and displaying the image picture at a preset display position on the photographed image.

The display position of the image picture may be set for each combination of a crop name, a growth stage, and a photographing point, for example. The information that indicates the display position of the image picture is added to the image picture included in the reference scale information, for example.

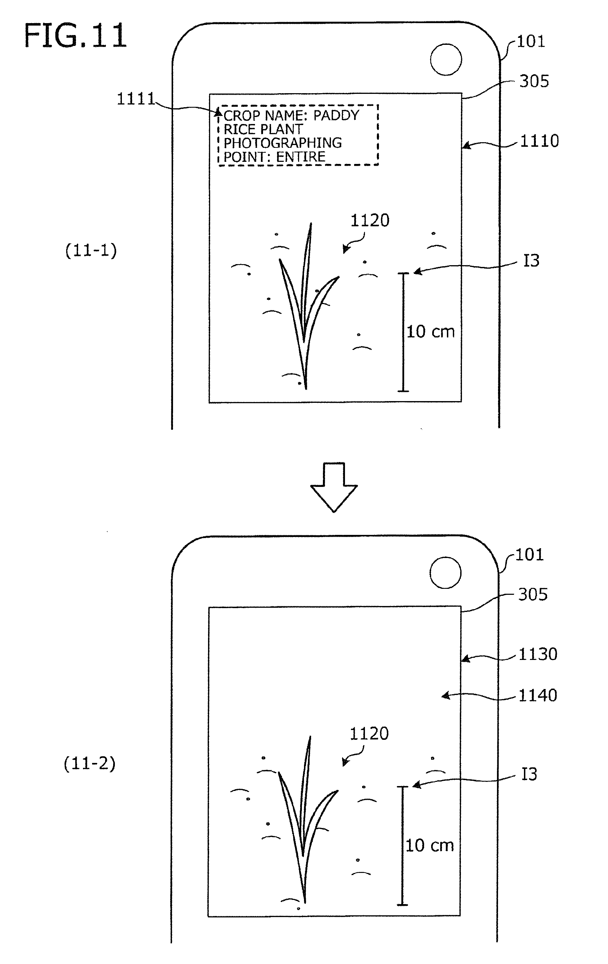

As a result, the growth state of the given crop imaged on the photographed image can be comprehended based on the size of the image picture on the photographed image displayed on the display 305. A specific example of the photographed image including the image picture will be described later with reference to FIGs. 11 to 13.

The changing unit 808 has a function of changing the display position on the photographed image of the image picture that is superimposed and displayed along with the photographed image on the display 305. For example, the changing unit 808 changes according to operation input of a user using the operation buttons 304, the display position of the image picture on the photographed image displayed on the display 305.

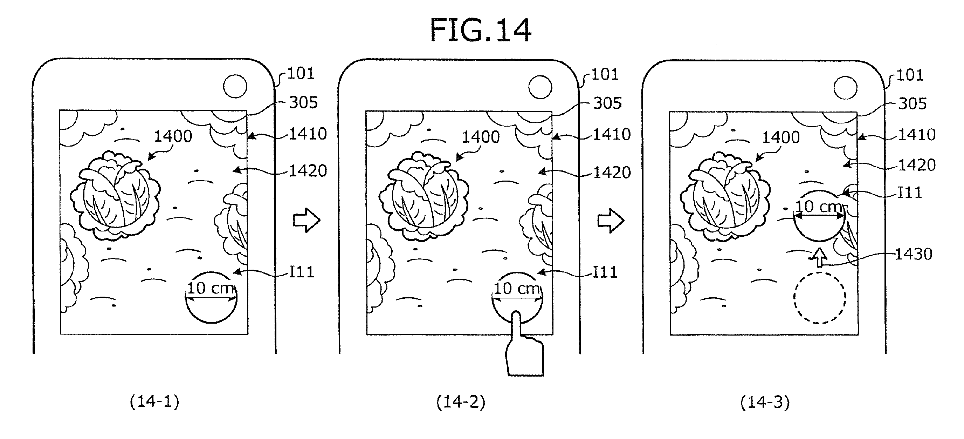

As a result, the display position of the image picture on the photographed image can be changed to facilitate the comparison between the size of the given crop and the size of the image picture on the photographed image. The display position may be changed by rotating the image picture around the gravity center of the image picture. A change example of the image picture will be described later with reference to FIG. 14.

In the following description, a photographed image taken by the camera 110 of the photographing apparatus 101 will be referred to as a "photographed image P"; an image picture correlated with the photographed image P will be referred to as an "image picture I"; and a display position of the image picture I on the photographed image P will be referred to as a "display position E".

The output unit 806 has a function of, if the display position E of the image picture I on the photographed image P is changed, outputting the photographed image P, the image picture I, and the changed display position E of the image picture I on the photographed image P after the change, in a correlated manner. For example, the output unit 806 may transmit in a correlated manner to the information providing apparatus 102, the image picture I, and the display position E after the change, and the photographing information that indicates the photographed image P.

The display control unit 807 has a function of displaying photographing point information that indicates a photographing point of the given crop on the display 305. The photographing point of the given crop is identified from the reference scale information SD, for example. For example, the display control unit 807 displays the photographing point information on the finder screen of the camera 110. For example, the finder screen is displayed on the display 305. As a result, the photographing point of the given crop to be focused can be checked by the worker W at the time of photographing of the given crop.

The display control unit 807 has a function of displaying the created image picture along with the object on the display 305. For example, the display control unit 807 displays the image picture on the finder screen of the camera 110.

As a result, a photographer can determine a composition facilitating the comparison between the given crop and the image picture on the photographed image to photograph the given crop. Therefore, the image picture can not only be used simply as a comparison reference but also be utilized as a template guiding the display position of the given crop on the photographed image. A specific example of the finder screen will be described later with reference to FIGs. 11 to 13.

### (Process Details of the Calculating Unit 804)

An example of process details of the calculating unit 804 that calculates a standard dimension of a given crop on a photographed image will be described with reference to FIGs. 9 and 10.

FIG. 9 is an explanatory view (part one) of a positional relationship between the camera 110 and a photographing object. FIG. 9 depicts the positional relationship between the camera 110 of the photographing apparatus 101 and cabbage 910 that is the photographing object.

First, the calculating unit 804 detects a photographing distance L between the camera 110 and the given crop. If the focal distance of the camera 110 is fixed, the camera 110 is focused at a substantially constant distance. Therefore, the calculating unit 804 may detect the distance as the photographing distance L when the camera 110 is focused.

Alternatively, the calculating unit 804 may apply a laser beam to the given crop and measure the photographing distance L between the camera 110 and the given crop from the time consumed for the laser beam to be reflected and returned. In this case, the photographing apparatus 101 has, for example, a mechanism that applies the laser beam to the given crop and a mechanism that receives the laser beam reflected and returned from the given crop.

The calculating unit 804 may use a distance between the photographing apparatus 101 and a given farm field acquired from the positional information of the given farm field and the positional information of the photographing apparatus 101 as the photographing distance L between the camera 110 and the given crop. The positional information of the given farm field is stored in the memory 302, for example.

The calculating unit 804 then detects the angle of view α of the camera 110. The angle of view α indicates a range of the scene imaged on the photographed image taken by the camera 110. For example, the angle of view α can be obtained from the focal length of the camera 110, a screen size of the photographed image, etc. In the example of FIG. 9, the angle of view α is depicted that represents a range of the scene imaged on a photographed image 900.

The calculating unit 804 calculates a length q1 of a line segment Q horizontally dividing the photographed image 900, i.e., the actual length q1 of the line segment Q imaged in the photographed image 900, based on the photographing distance L from the camera 110 to the given crop and the angle of view α of the camera 110. The line segment Q is a line segment connecting a point A and a point B.

The calculating unit 804 also identifies a length q2 of the line segment Q on the photographed image 900, based on a screen size of the photographed image 900. The screen size of the photographed image 900 is vertical and horizontal lengths of the photographed image 900, for example. The screen size of the photographed image 900 is stored in the memory 302, for example.

The calculating unit 804 then divides, for example, the length q2 on the photographed image 900 by the actual length q1 to calculate a photographing magnification M of the camera 110. For example, assuming the actual length q1 of the line segment Q imaged on the photographed image 900 as "q1=150 [cm]" and the length q2 on the photographed image 900 as "q2=15 [cm]", the photographing magnification M of the camera 110 is "1/10 [times]".

The calculating unit 804 calculates the standard dimension of the given crop on the photographed image 900, based on the reference scale information SD and the photographing magnification M of the camera 110. For example, the calculating unit 804 multiplies the standard dimension of the photographing point of the cabbage 910 by the photographing magnification M of the camera 110 to calculate the standard dimension of the photographing point on the photographed image 900.

For example, the reference scale information 500-1 depicted in FIG. 5 is taken as an example to assume that the photographing point of the cabbage 910 is the "head" and that the standard dimension of the photographing point is "10 [cm]". In this case, the standard dimension of the photographing point "head" of the cabbage 910 on the photographed image 900 is "1 [cm] (=10 [cm] ×1/10)".

In this case, the creating unit 805 modifies the image picture I11 included in the reference scale information 500-1 according to the calculated dimension, thereby creating the image picture I11 representative of the standard dimension of the photographing point "head" of the cabbage 910 on the photographed image 900. In this case, the image picture I11 is a circular graphic with a diameter of 1 [cm].

The case of utilizing a height of the camera 110 from a ground surface to calculate the standard dimension of the given crop on the photographed image will be described.

FIG. 10 is an explanatory view (part two) of a positional relationship between the camera 110 and a photographing object. FIG. 10 depicts the positional relationship between the camera 110 of the photographing apparatus 101 and a paddy rice plant 1010 that is the photographing object. In this example, it is assumed that the camera 110 is kept horizontal by utilizing a three-axis acceleration sensor (not depicted) of the photographing apparatus 101.

In this case, the worker W adjusts the magnification of the camera 110 and the distance from the paddy rice plant 1010 such that the lower end of the photographed image coincides with a point C included in the paddy rice plant 1010, i.e., the photographing object, and is positioned at the same height as the ground surface on which the worker W is standing. In this state, the worker W can photograph the paddy rice plant 1010 to identify an actual length of a line segment vertically dividing the photographed image, i.e., a line segment connecting a point C and a point D.

In the example of FIG. 10, the actual length of the line segment vertically dividing the photographed image and connecting the point C and the point D is the same as the height of the camera 110 from the ground surface on which the worker W is standing, which is 1 [m]. The process details of calculating the photographing magnification M from the actual length of the line segment connecting the point C and the point D are the same as the process details of calculating the photographing magnification M from the actual length q1 of the line segment Q horizontally dividing the photographed image 900 described above and therefore, will not be described. A calculation technique of calculating the photographing magnification M of the camera 110 may be implemented by using an existing calculation technique different from the calculation technique described above.

### (Example of Screen of the Display 305)

An example of a screen displayed on the display 305 at the time of photographing of a given crop will be described with reference to FIGs. 11 to 13.

FIG. 11 is an explanatory view (part one) of an example of a screen on the display 305. In (11-1) of FIG. 11, a finder screen 1110 is displayed on the display 305 of the photographing apparatus 101. The finder screen 1110 is a screen based on the reference scale information 500-3 in the reference scale DB 120 depicted in FIG. 5.

The finder screen 1110 displays photographing point information 1111 and the image picture I3. The photographing point information 1111 is information that indicates a photographing point of a given crop to be photographed. From the photographing point information 1111, a photographer can recognize the photographing point "entirety" of the crop name "paddy rice plant" to be photographed.

The image picture I3 represents the standard dimension of the photographing point "entirety" on the photographed image, i.e., on the finder screen 1110. From the image picture I3, the photographer can determine a composition facilitating the comparison between a paddy rice plant 1120 to be photographed and the image picture I3 when checking the photographed image, before photographing.

In (11-2) of FIG. 11, a photographing result display screen 1130 is displayed on the display 305 of the photographing apparatus 101. A photographed image 1140 obtained by photographing the paddy rice plant 1120 displayed on the finder screen 1110 and the image picture I3 are superimposed and displayed on the photographing result display screen 1130. The photographed image 1140 is correlated with the image picture I3 and stored in the photographed image DB 210, for example.

From the photographing result display screen 1130, the growth state of the paddy rice plant 1120 can be comprehended based on the size of the image picture I3 on the photographed image 1140. In the example of FIG. 11, it can be comprehended that the growth state of the paddy rice plant 1120 is better than the standard growth state.

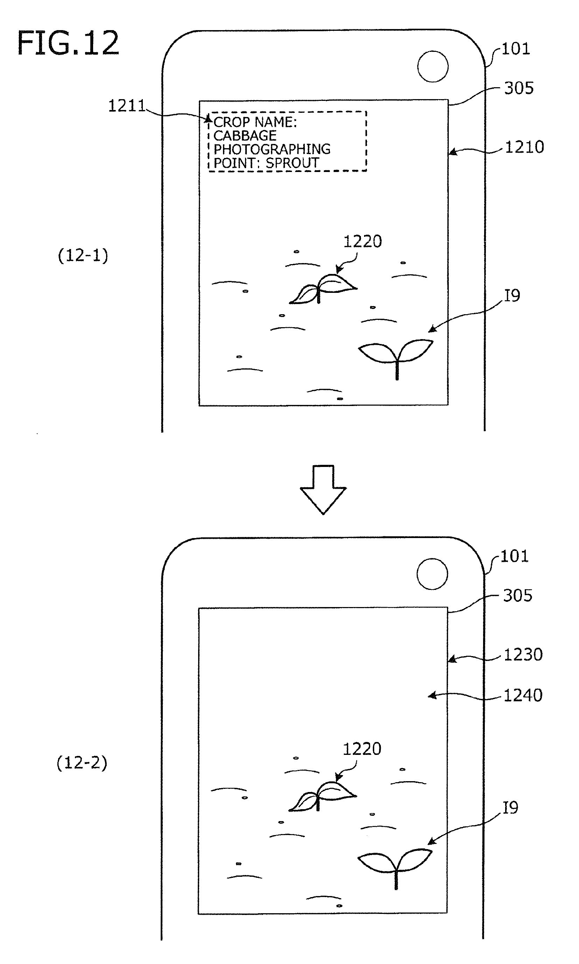

FIG. 12 is an explanatory view (part two) of an example of a screen on the display 305. In (12-1) of FIG. 12, a finder screen 1210 is displayed on the display 305 of the photographing apparatus 101. The finder screen 1210 is a screen based on the reference scale information 500-9 in the reference scale DB 120 depicted in FIG. 5.

The finder screen 1210 displays photographing point information 1211 and the image picture I9. From the photographing point information 1211, a photographer can recognize the photographing point "sprout" of the crop name "cabbage" to be photographed.

The image picture I9 represents the standard dimension of the photographing point "sprout" on the photographed image, i.e., on the finder screen 1210. From the image picture I9, the photographer can determine a composition facilitating the comparison between a cabbage 1220 to be photographed and the image picture I9 when checking the photographed image, before photographing.

In (12-2) of FIG. 12, a photographing result display screen 1230 is displayed on the display 305 of the photographing apparatus 101. A photographed image 1240 obtained by photographing the cabbage 1220 displayed on the finder screen 1210 and the image picture I9 are superimposed and displayed on the photographing result display screen 1230. The photographed image 1240 is correlated with the image picture I9 and stored in the photographed image DB 210, for example.

From the photographing result display screen 1230, the growth state of the cabbage 1220 can be comprehended based on the size of the image picture I9 on the photographed image 1240. Further, from the photographing result display screen 1230, the image picture I9 is of a shape imitating the photographing point "sprout" of the cabbage 1220, thereby enabling intuitive comprehension of the growth state, e.g., the size, shape, etc., of the cabbage 1220. In the example of FIG. 12, it can be comprehended that the growth state of the cabbage 1220 is worse than the standard growth state.

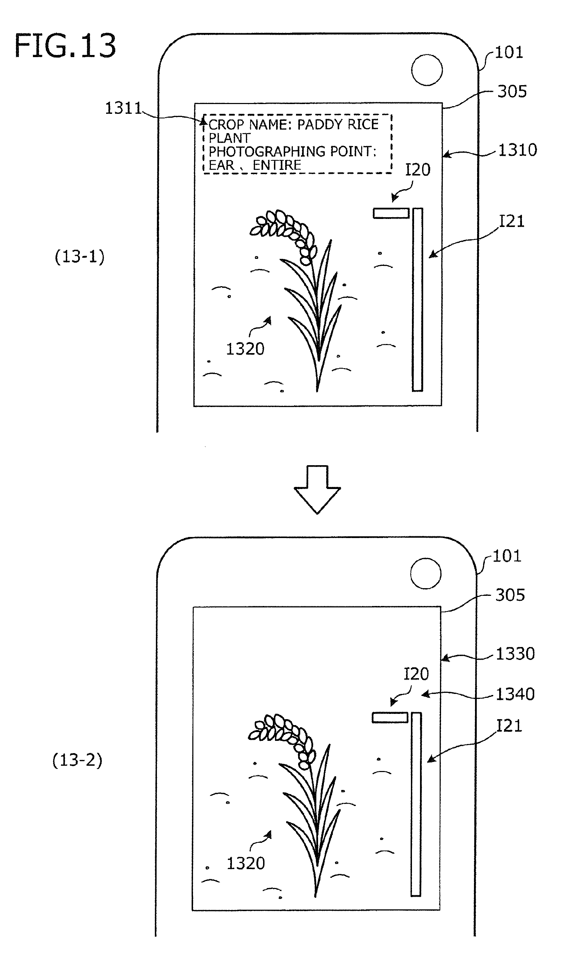

FIG. 13 is an explanatory view (part three) of an example of a screen on the display 305. In (13-1) of FIG. 13, a finder screen 1310 is displayed on the display 305 of the photographing apparatus 101. The finder screen 1310 is an example of a screen in a case where the photographing object has multiple photographing points.

The finder screen 1310 displays photographing point information 1311 and the image pictures I20, I21. From the photographing point information 1211, a photographer can recognize the photographing points "ear" and "entirety" of the crop name "paddy rice plant" to be photographed.

The image picture I20 represents the standard dimension of the photographing point "ear" on the photographed image, i.e., on the finder screen 1310. The image picture I21 represents the standard dimension of the photographing point "entirety" on the photographed image, i.e., on the finder screen 1310. From the image pictures I20, I21, the photographer can determine a composition facilitating the comparison between a paddy rice plant 1320 to be photographed and the image pictures I20, I21 when checking the photographed image, before photographing.

In (13-2) of FIG. 13, a photographing result display screen 1330 is displayed on the display 305 of the photographing apparatus 101. A photographed image 1340 obtained by photographing the paddy rice plant 1320 displayed on the finder screen 1310 and the image pictures I20, I21 are superimposed and displayed on the photographing result display screen 1330. The photographed image 1340 is correlated with the image pictures I20, I21 and stored in the photographed image DB 210, for example.

From the photographing result display screen 1330, the growth state of the paddy rice plant 1320 can be comprehended based on the size of the image pictures I20, I21 on the photographed image 1340. Further, from the photographing result display screen 1330, the size of the image picture I21 on the photographed image 1340 represents the standard, thereby enabling comprehension of the growth state of the paddy rice plant 1320. In the example of FIG. 13, it can be comprehended that the growth state of the paddy rice plant 1320 coincides with the standard growth state.

### (Change Example of the Display Position E of the Image Picture I)

Description will be made of a specific example of a case of changing the display position E of the image picture I on the photographed image P when the photographed image P and the image picture I are superimposed and displayed on the display 305.

FIG. 14 is an explanatory view of an example of a changing of the display position E of the image picture I. In (14-1) of FIG. 14, a photographing result display screen 1410 is displayed on the display 305 of the photographing apparatus 101. A photographed image 1420 obtained by photographing a cabbage 1400 and the image picture I11 are superimposed and displayed on the photographing result display screen 1410.

In (14-2) of FIG. 14, the image picture I11 on the photographed image 1420 is selected through user operation input. In this example, the user touches the image picture I11 displayed on the photographing result display screen 1410 to select the image picture I11.

In (14-3) of FIG. 14, as a result of moving the selected image picture I11 along an arrow 1430, the display position of the image picture I11 on the photographed image 1420 changes. For example, the image picture I11 is displayed just beside the cabbage 1400 on the photographed image 1420. This photographed image 1420 is correlated with the image picture I11 and the changed display position, and stored in the photographed image DB 210.

As a result, the display position of the image picture I11 can be changed to facilitate the comparison of the size of the cabbage 1400 and the size of the image picture I11 on the photographed image 1420. As a result, a slight difference in degree of head formation can be determined between the cabbage 1400 and the image picture I11. In the example of FIG. 14, it can be understood that the degree of head formation of the cabbage 1400 is slightly better than the standard degree of head formation.

### (Example of Functional Configuration of the Information Providing Apparatus 102)

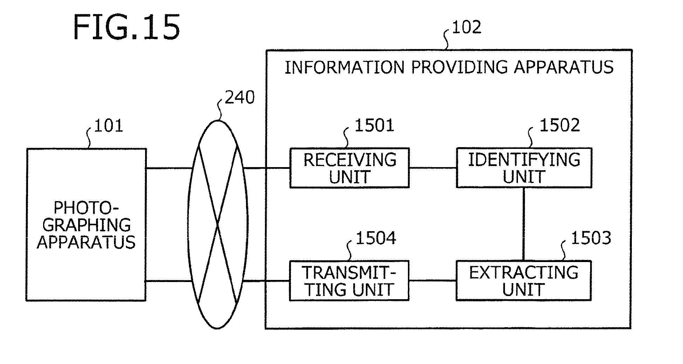

An example of a functional configuration of the information providing apparatus 102 according to the first embodiment will be described. FIG. 15 is a block diagram of a functional configuration of the information providing apparatus 102 according to the first embodiment. In FIG. 15, the information providing apparatus 102 includes a receiving unit 1501, an identifying unit 1502, an extracting unit 1503, and a transmitting unit 1504. The receiving unit 1501 to the transmitting unit 1504 are functions acting as a control unit and, for example, the functions are implemented by causing the CPU 401 to execute a program stored in a storage device such as the ROM 402, the RAM 403, the magnetic disk 405, and the optical disk 407 depicted in FIG. 4, or by the I/F 409. The process results of the functional units are stored in a storage device such as the RAM 403, the magnetic disk 405, and the optical disk 407, for example.

The receiving unit 1501 has a function of receiving from the photographing apparatus 101, the apparatus information of the photographing apparatus 101. As described above, for example, the apparatus information of the photographing apparatus 101 includes at least one among the apparatus ID, the worker ID, the farm field name, the farm field ID, the crop name, the growth stage, and the positional information of the photographing apparatus 101.

The identifying unit 1502 has a function of identifying based on the received apparatus information of the photographing apparatus 101, the farm field Fi to be photographed by the photographing apparatus 101 among the farm fields F1 to Fn. It is assumed that the apparatus information of the photographing apparatus 101 includes the farm field ID. In this case, for example, the identifying unit 1502 identifies the farm field Fi corresponding to the farm field ID included in the apparatus information of the photographing apparatus 101 out of the farm fields F1 to Fn.

It is assumed that the apparatus information of the photographing apparatus 101 includes positional information of the photographing apparatus 101. In this case, for example, based on the positional information of the photographing apparatus 101 and the farm field positions of the farm field information 600-1 to 600-n in the farm field DB 220 depicted in FIG. 6, the identifying unit 1502 identifies the farm field Fi to be photographed by the photographing apparatus 101.

In particular, for example, it is assumed that the farm field positions respectively indicated in the farm field information 600-1 to 600-n are the center of mass positions of the farm fields F1 to Fn. In this case, for example, the identifying unit 1502 may identify the farm field Fi located closest to the photographing apparatus 101 among the farm fields F1 to Fn. Alternatively, it is assumed that the farm field positions respectively indicated in the farm field information 600-1 to 600-n is information identifying the areas of the farm fields F1 to Fn. In this case, for example, the identifying unit 1502 may identify the farm field Fi that includes position indicated by the positional information of the photographing apparatus 101, among the farm fields F1 to Fn. If no farm field is identified that includes the position indicated by the positional information of the photographing apparatus 101, the identifying unit 1502 may identify the farm field Fi located closest to the photographing apparatus 101 among the farm fields F1 to Fn.

It is assumed that the apparatus information of the photographing apparatus 101 includes the apparatus ID or the worker ID and that the farm field DB 220 includes the work schedule information. In this case, for example, the identifying unit 1502 may identify the farm field Fi where the worker W identified from the apparatus ID or the worker ID performs the scheduled farm work, among the farm fields F1 to Fn.

The extracting unit 1503 has a function of extracting from the reference scale DB 120, the reference scale information that indicates the standard dimension of the crop cultivated in the identified farm field Fi. For example, first, the extracting unit 1503 extracts from the farm field DB 220, farm field information 600-i of the identified farm field Fi.

The extracting unit 1503 then identifies from the extracted farm field information 600-i, a combination of the crop name and the growth stage of the crop cultivated in the farm field Fi. The extracting unit 1503 extracts from the reference scale DB 120, the reference scale information corresponding to the identified combination of the crop name and the growth stage.

As a result, the reference scale information that indicates the standard dimension of the crop cultivated in the farm field Fi can be extracted. The extraction of the reference scale information corresponding to the combination of the crop name and the growth stage enables identification of the photographing point, the reference scale, and the image picture corresponding to the growth stage of the crop.

The transmitting unit 1504 has a function of transmitting the extracted reference scale information to the photographing apparatus 101 that is the transmission source of the apparatus information. For example, the transmitting unit 1504 may add the farm field ID or the farm field name of the farm field Fi to be photographed to the extracted reference scale information for the transmission to the photographing apparatus 101. For example, the transmitting unit 1504 may excerpt and transmit to the photographing apparatus 101, a portion of the reference scale information, such as the photographing point, the reference scale, and the image picture.

As a result, the reference scale information corresponding to the growth stage of the crop cultivated in the farm field Fi to be photographed can be provided to the photographing apparatus 101.

The receiving unit 1501 has a function of receiving from the photographing apparatus 101, the photographing information, including the photographed image P taken by the photographing apparatus 101. The photographing information is information that indicates the photographed image P, the image picture I, and the display position E in a correlated manner, for example. The received photographing information is stored in the photographed image DB 230 depicted in FIG. 7, for example.

### (Patrolling Result List Screen 1600)

A screen example of a patrolling result list screen 1600 will be described that is displayed on the display 408 of the client apparatus 201. The patrolling result list screen 1600 is information provided from the information providing apparatus 102 to the client apparatus 201 in response to a browsing request from the client apparatus 201, for example.

The browsing request includes information that identifies a photographed image that is to be viewed, such as photographing date and time, a farm field ID, a farm field name, a worker ID, a crop name, and a growth stage, for example. The information providing apparatus 102 extracts from the photographed image DB 230, for example, the photographed images to be viewed to create and provide the patrolling result list screen 1600 to the client apparatus 201.

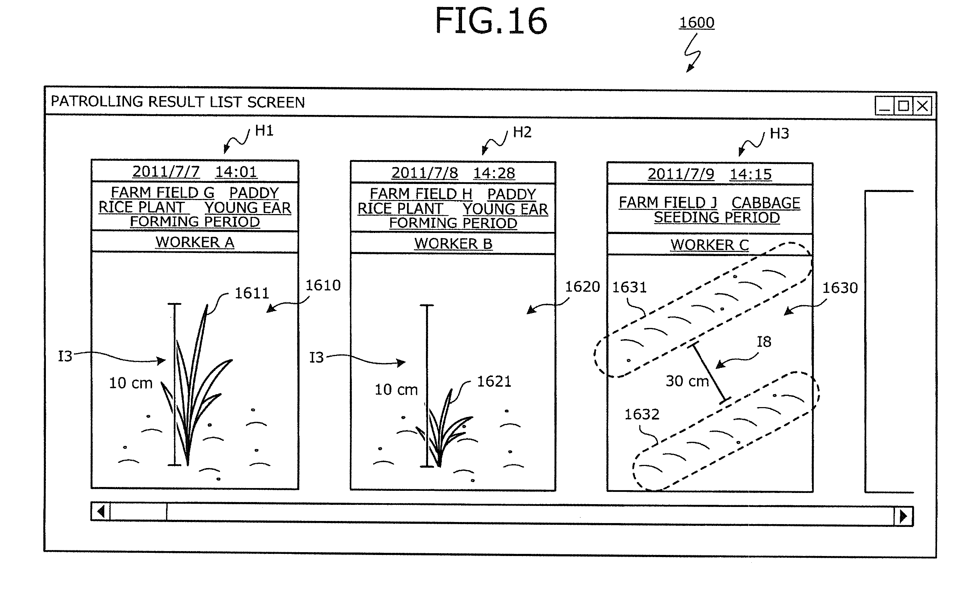

FIG. 16 is an explanatory view of a screen example of the patrolling result list screen 1600. In FIG. 16, the patrolling result list screen 1600 displays display data H1 to H3.

The display data H1 is display data of a photographed image 1610. The display data H1 indicates the photographing date and time "2011/7/7 14:01" of the photographed image 1610, the farm field name "farm field G" of the given farm field, the crop name "paddy rice plant" of the given crop, the growth stage "young ear forming period", and the photographer "worker A" of the photographed image 1610.

From the display data H1, for example, a manager of a farm, i.e., a checker, can confirm that the growth state of a paddy rice plant 1611 cultivated in the farm field G is in the standard growth state, based on the size of the image picture I3 on the photographed image 1610. On the photographed image 1610, the image picture I3 is displayed at a preset display position or at a changed display position after a change made by the changing unit 808.

The display data H2 is display data of a photographed image 1620. The display data H2 indicates the photographing date and time "2011/7/8 14:28" of the photographed image 1620, the farm field name "farm field H" of the given farm field, the crop name "paddy rice plant" of the given crop, the growth stage "young ear forming period", and the photographer "worker B" of the photographed image 1620.

From the display data H2, the checker can confirm that the growth state of a paddy rice plant 1621 cultivated in the farm field H is poorer than the standard growth state based on the size of the image picture I3 on the photographed image 1620. On the photographed image 1620, the image picture I3 is displayed at a preset display position or at a changed display position after a change made by the changing unit 808.

The display data H3 is display data of a photographed image 1630. The display data H3 indicates the photographing date and time "2011/7/9 14:15" of the photographed image 1630, the farm field name "farm field J" of the given farm field, the crop name "cabbage" of the given crop, the growth stage "seeding period", and the photographer "worker C" of the photographed image 1630.

From the display data H3, the checker can confirm that an interval between a row 1631 and a row 1632 of the cabbage cultivated in the farm field J is a proper interval based on the interval of line segments of the image picture I8 on the photographed image 1630. On the photographed image 1630, the image picture I8 is displayed at a preset display position or at a changed display position after a change made by the changing unit 808.

The patrolling result list screen 1600 enables, for example, the photographed images such as the photographed images 1610, 1620, and 1630 photographed in, for example, the farm fields Fi such as the farm field G, H, and J to be collectively viewed. As depicted in the photographed images 1610 and 1620, the display positions of the image picture, for example, the image picture I3, can be standardized on the photographed images of the same crop and the same growth stage to facilitate the comparison between the given crop and the image picture by the checker, thereby achieving higher work efficiency. The patrolling result list screen 1600 may be displayed on the display 408 of the information providing apparatus 102.

### (Work Support Process Procedure of the Photographing Apparatus 101)

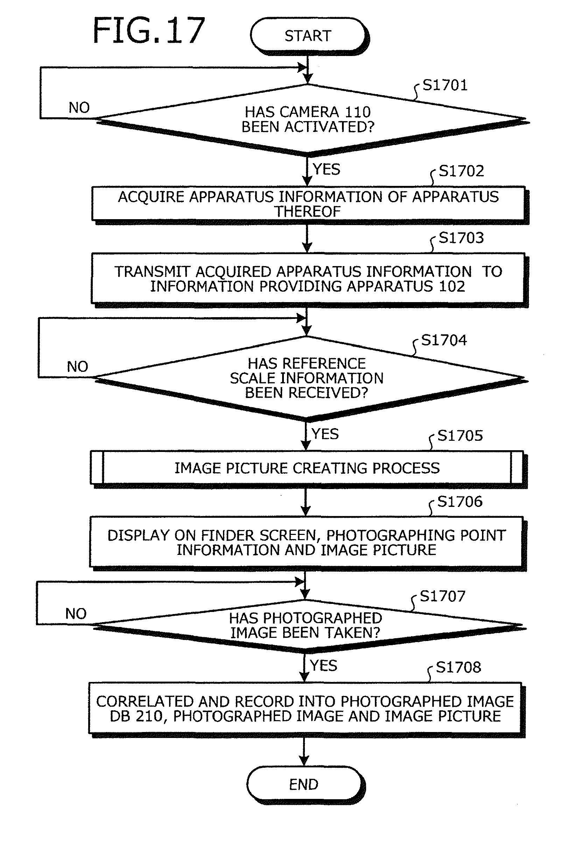

A work support process procedure of the photographing apparatus 101 according to the first embodiment will be described. FIG. 17 is a flowchart of an example of the work support process procedure of the photographing apparatus 101 according to the first embodiment. In the flowchart of FIG. 17, first, the photographing apparatus 101 determines whether the camera 110 has been activated (step S1701).

If not, the photographing apparatus 101 waits until the camera 110 is activated (step S1701: NO), and when the camera 110 is activated (step S1701: YES), the acquiring unit 801 acquires the apparatus information of the apparatus thereof (step S1702). The transmitting unit 802 transmits the acquired apparatus information of the apparatus to the information providing apparatus 102 (step S1703).

The receiving unit 803 determines whether the reference scale information that indicates the standard dimension of the given crop to be photographed has been received from the information providing apparatus 102 (step S1704). If not, the receiving unit 803 waits until the reference scale information is received (step S1704: NO).

If the reference scale information has been received (step S1704: YES), the creating unit 805 executes an image picture creating process of creating the image picture representative of the standard dimension of the given crop on the photographed image (step S1705).

The display control unit 807 displays on the finder screen of the camera 110, the photographing point information that indicates the photographing point of the given crop and the image picture created at step S1705 (step S1706). The photographing apparatus 101 determines whether a photographed image has been taken by the camera 110 (step S1707).

If not, the photographing apparatus 101 waits until a photographed image is taken (step S1707: NO). If a photographed image has been taken (step S1707: YES), the output unit 806 records into the photographed image DB 210, the taken photographed image and the created image picture in a correlated manner (step S1708), and a series of the process depicted by the flowchart is terminated.

As a result, the photographed image of the given crop taken by the camera 110 and the image picture representative of the standard dimension of the given crop on the photographed image can be recorded in a correlated manner in the photographed image DB 210.

If the image picture is not displayed on the finder screen of the camera 110 at step S1706, the image picture creating process at step S1705 may be executed after the photographed image is taken by the camera 110.

A process procedure of the image picture creating process at step S1705 depicted in FIG. 17 will be described.

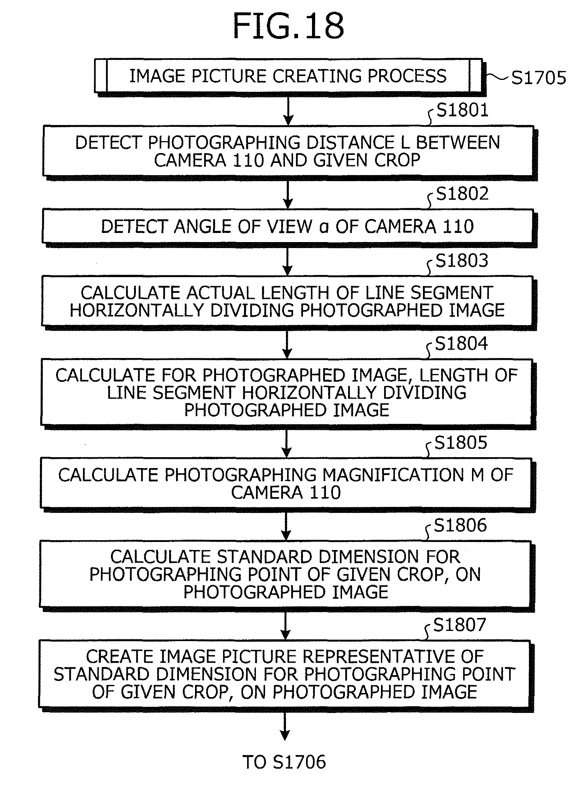

FIG. 18 is a flowchart of an example of a process procedure of the image picture creating process. In the flowchart of FIG. 18, first, the calculating unit 804 detects the photographing distance L between the camera 110 and the given crop (step S1801). The calculating unit 804 detects the angle of view α of the camera 110 (step S1802).

The calculating unit 804 calculates the actual length of a line segment horizontally dividing the photographed image, based on the detected photographing distance L and the angle of view α (step S1803). The calculating unit 804 identifies on the photographed image, the length of the line segment horizontally dividing the photographed image, based on the screen size of the photographed image (step S1804).

The calculating unit 804 calculates the photographing magnification M of the camera 110, based on the actual length and the length on the photographed image of the line segment horizontally dividing the photographed image (step S1805). The calculating unit 804 calculates the standard dimension of the photographing point of the given crop on the photographed image, based on the reference scale information received at step S1704 depicted in FIG. 17 and the photographing magnification M of the camera 110 (step S1806).

The creating unit 805 creates an image picture representative of the standard dimension of the photographing point of the given crop on the photographed image based on the calculated dimension and the image picture included in the reference scale information (step S1807) and the procedure goes to step S1706 depicted in FIG. 17.

As a result, an image picture can be created that represents the standard dimension of the given crop on the photographed image taken by the camera 110.

### (Information Providing Process Procedure of the Information Providing Apparatus 102)

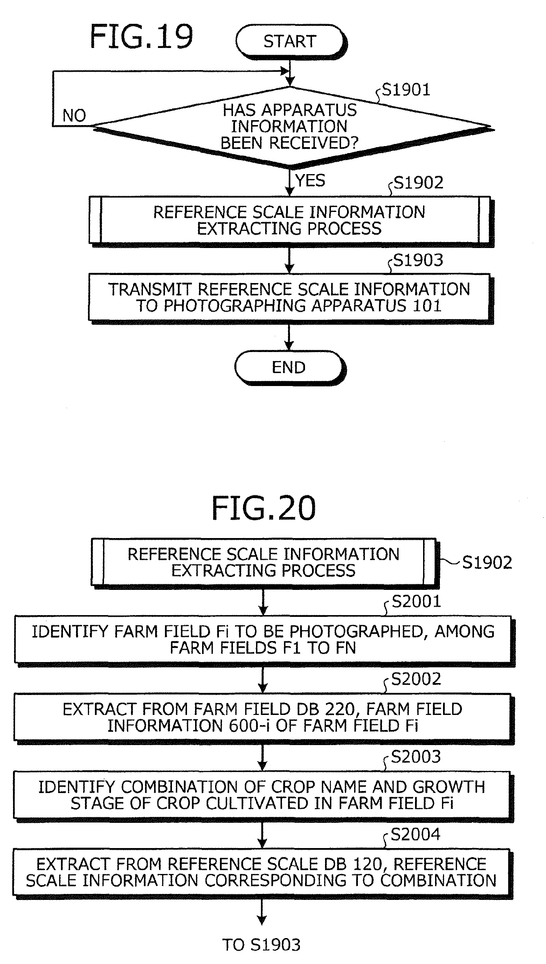

An information providing process procedure of the information providing apparatus 102 according to the first embodiment will be described. FIG. 19 is a flowchart of an example of the information providing process procedure of the information providing apparatus 102 according to the first embodiment. In the flowchart of FIG. 19, first, the receiving unit 1501 determines whether the apparatus information of the photographing apparatus 101 has been received from the photographing apparatus 101 (step S1901).

If not, the receiving unit 1501 waits until the apparatus information of the photographing apparatus 101 has been received (step S1901: NO). If the apparatus information of the photographing apparatus 101 has been received (step S1901: YES), the extracting unit 1503 executes a reference scale information extracting process of extracting the reference scale information from the reference scale DB 120 (step S1902).

The transmitting unit 1504 transmits the extracted reference scale information to the photographing apparatus 101 (step S1903), and a series of the process depicted by the flowchart is terminated. As a result, the reference scale information corresponding to the growth stage of the crop cultivated in the farm field Fi to be photographed can be provided to the photographing apparatus 101.

A process procedure of the reference scale information extracting process at step S1902 depicted in FIG. 19 will be described.

FIG. 20 is a flowchart of an example of a process procedure of the reference scale information extracting process. In the flowchart of FIG. 20, first, the identifying unit 1502 identifies the farm field Fi to be photographed by the photographing apparatus 101, among the farm fields F1 to Fn and based on the apparatus information of the photographing apparatus 101 received at step S1901 depicted in FIG. 19 (step S2001).

The extracting unit 1503 extracts from the farm field DB 220, the farm field information 600-i of the identified farm field Fi (step S2002). The extracting unit 1503 identifies from the extracted farm field information 600-i, a combination of the crop name and the growth stage of the crop cultivated in the farm field Fi (step S2003).

The extracting unit 1503 extracts from the reference scale DB 120, the reference scale information corresponding to the identified combination of the crop name and the growth stage (step S2004), and the procedure goes to step S1903 depicted in FIG. 19. As a result, the reference scale information can be extracted that corresponds to the growth stage of the crop cultivated in the farm field Fi to be photographed.

As described above, the photographing apparatus 101 according to the first embodiment can create the image picture representative of the standard dimension of the given crop on the photographed image, based on the photographing condition at the time of photographing of the given crop and the reference scale information that indicates the standard dimension of the given crop. The photographing apparatus 101 can output the photographed image taken by the camera 110 and the image picture in a correlated manner.

Therefore, the image picture representative of the standard dimension of the given crop can be superimposed and displayed on the photographed image and, when the photographed image is checked, the growth state of the given crop can be comprehended based on the size of the image picture on the photographed image. As a result, the work burden and human errors of a checker can be reduced when the photographed image is checked.

The photographing apparatus 101 according to the first embodiment can calculate the photographing magnification M indicative of the ratio of the actual dimension of the given crop and the dimension of the given crop on the photographed image, based on the photographing condition at the time of photographing of the given crop, thereby calculates the standard dimension of the given crop on the photographed image.

The photographing apparatus 101 according to the first embodiment can acquire the reference scale information that indicates the standard dimension of the photographing point corresponding to the growth stage of the given crop. As a result, even if a certain crop has a photographing position to be focused and the standard dimension of the certain crop differs for each growth stage, reference scale information can be acquired that indicates the standard dimension of the photographing point corresponding to a combination of a crop name and a growth stage.

For example, in the rooting period of paddy rice plants, the image picture I2 representative of the standard dimension of the photographing point "stem" can be displayed on the photographed image so as to check whether the plants have taken root and have a stem of a predetermined thickness above the water surface. In the maturing period of paddy rice plants, the image picture I6 representative of the standard dimension of the photographing point "ear" can be displayed on the photographed image so as to check whether the ear has started ripening to a size of about 5 [cm]. For example, in the harvesting period of mandarin oranges, an image picture representative of a standard dimension of a photographing point "fruit" can be displayed on the photographed image so as to examine a measure with awareness of standard sizes for shipment such as 3L, 2L, L, M, and S, for example.

The photographing apparatus 101 according to the first embodiment can display the image picture along with the object on the finder screen of the camera 110. As a result, a photographer can determine a composition facilitating the comparison of the given crop and the image picture on the photographed image to photograph the given crop.

The photographing apparatus 101 according to the first embodiment can change the display position of the image picture on the photographed image superimposed and displayed on the display 305 through user operation input. As a result, the display position of the image picture can be changed to facilitate the comparison between the size of the given crop and the size of the image picture on the photographed image.

The photographing apparatus 101 according to the first embodiment can create an image picture imitating a shape of the given crop. As a result, the growth state such as the size and the shape of the given crop can be comprehended intuitively by comparing the given crop and the image picture on the photographed image.

The information providing apparatus 102 according to the first embodiment can identify based on the apparatus information of the photographing apparatus 101, the farm field Fi to be photographed among the farm fields F1 to Fn. For example, the farm field Fi to be photographed can be obtained by identifying the farm field located closest to the photographing apparatus 101. The farm field Fi to be photographed can be obtained by identifying the farm field where the worker W using the photographing apparatus 101 performs a scheduled farm work.

The information providing apparatus 102 according to the first embodiment can provide to the photographing apparatus 101, the reference scale information corresponding to the combination of the crop name and the growth stage of the crop cultivated in the farm field Fi to be photographed. As a result, the photographing apparatus 101 can identify the photographing point, the reference scale, and the image picture corresponding to the combination of the crop name and the growth stage of the given crop.

Although the photographing apparatus 101 creates the image picture representative of the standard dimension of the given crop on the photographed image in the description, this is not a limitation. For example, the information providing apparatus 102 may create the image picture representative of the standard dimension of the given crop on the photographed image.

In particular, for example, the photographing apparatus 101 transmits to the information providing apparatus 102, the apparatus information including a photographed image taken by the camera 110 and a photographing condition at the time of photographing. The information providing apparatus 102 may then create the image picture representative of the standard dimension of the given crop on the photographed image. In this case, the information providing apparatus 102 has functional units corresponding to the calculating unit 804 and the creating unit 805 of the photographing apparatus 101 depicted in FIG. 8. Configuration of the photographing apparatus 101 may omit the functional units corresponding to the calculating unit 804 and the creating unit 805, thereby simplifying the functional configuration of the photographing apparatus 101.

### (Second Embodiment)

The photographing apparatus 101 according to a second embodiment will be described. Although the first embodiment has been described in terms of the interlocked operation of the photographing apparatus 101 and the information providing apparatus 102, the second embodiment will be described in terms of independent operation of the photographing apparatus 101. Components identical to those described in the first embodiment are denoted by the same reference numerals used in the first embodiment and will not be described.

### (Functional Configuration Example of the Photographing Apparatus 101)

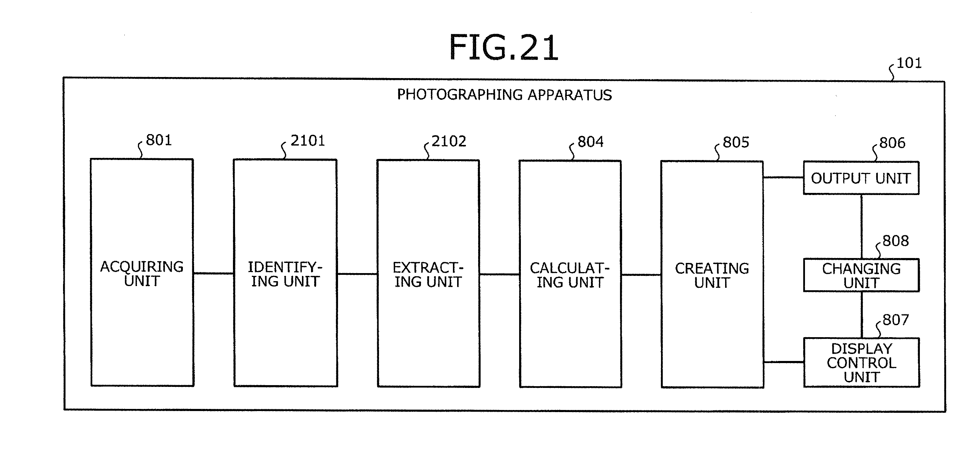

FIG. 21 is a block diagram of a functional configuration of the photographing apparatus 101 according to the second embodiment. In FIG. 21, the photographing apparatus 101 includes the acquiring unit 801, the calculating unit 804, the creating unit 805, the output unit 806, the display control unit 807, the changing unit 808, an identifying unit 2101, and an extracting unit 2102. The acquiring unit 801, the calculating unit 804 to the changing unit 808, the identifying unit 2101, and the extracting unit 2102 are functions acting as a control unit and, for example, these functions are implemented by causing the CPU 301 to execute a program stored in the memory 302 depicted in FIG. 3, or by the I/F 303. The process results of the functional units are stored in the memory 302, for example. The photographing apparatus 101 has the various DBs 120, 220, and 230 depicted in FIGs. 5 to 7.

The identifying unit 2101 has a function of identifying based on the apparatus information of its own apparatus, the farm field Fi to be photographed among the farm fields F1 to Fn. Specific process details of the identifying unit 2101 are the same as the identifying unit 1502 of the information providing apparatus 102 depicted in FIG. 15 and therefore, will not be described in detail.

The extracting unit 2102 has a function of extracting the reference scale information that indicates the standard dimension of the crop cultivated in the identified farm field Fi. Specific process details of the extracting unit 2102 are the same as the extracting unit 1503 of the information providing apparatus 102 depicted in FIG. 15 and therefore, will not be described in detail.

The calculating unit 804 has a function of calculating the standard dimension of the given crop on the photographed image, based on the photographing condition at the time of photographing of the given crop by the camera 110 and the extracted reference scale information. Specific process details of the calculating unit 804 are the same as the process details described in the first embodiment and therefore will not be described in detail.

### (Work Support Process Procedure of the Photographing Apparatus 101)

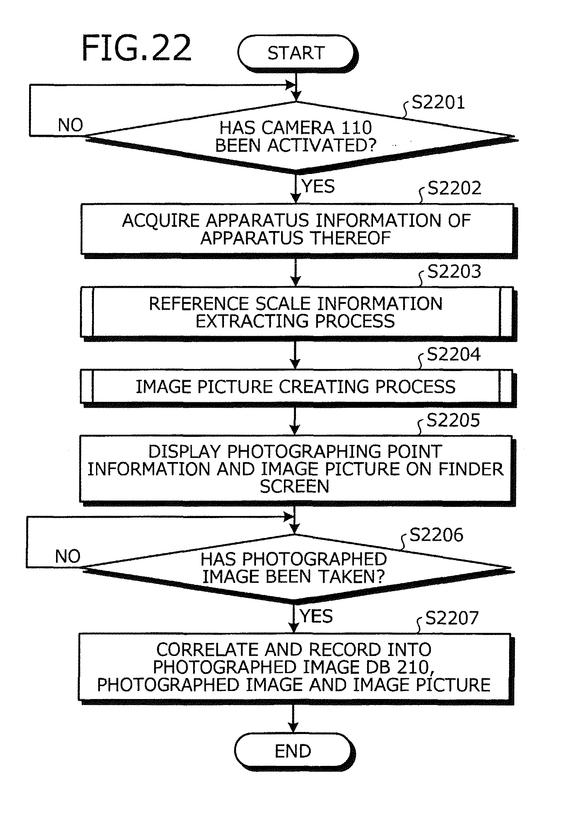

A work support process procedure of the photographing apparatus 101 according to the second embodiment will be described. FIG. 22 is a flowchart of an example of the work support process procedure of the photographing apparatus 101 according to the second embodiment. In the flowchart of FIG. 22, first, the photographing apparatus 101 determines whether the camera 110 has been activated (step S2201).

If not, the photographing apparatus 101 waits until the camera 110 is activated (step S2201: NO). If the camera 110 has been activated (step S2201: YES), the acquiring unit 801 acquires the apparatus information of the apparatus thereof (step S2202). The extracting unit 2102 executes the reference scale information extracting process of extracting the reference scale information from the reference scale DB 120 (step S2203).

With the receiving unit 803, the creating unit 805 executes the image picture creating process of creating the image picture representative of the standard dimension of the given crop on the photographed image (step S2204). The display control unit 807 displays the photographing point information that indicates the photographing point of the given crop and the image picture created at step S2204 on the finder screen of the camera 110 (step S2205).

The photographing apparatus 101 determines whether a photographed image has been taken by the camera 110 (step S2206). If not, the photographing apparatus 101 waits until a photographed image is taken (step S2206: NO).

If a photographed image has been taken (step S2206: YES), the output unit 806 records into the photographed image DB 210, the photographed image and the created image picture in a correlated manner (step S2207) and a series of the process depicted by the flowchart is terminated.

As a result, the reference scale information that corresponds to the growth state of the crop cultivated in the farm field Fi to be photographed can be acquired. The photographed image of the given crop taken by the camera 110 and the image picture representative of the standard dimension of the given crop on the photographed image can be recorded in a correlated manner in the photographed image DB 210.

A process procedure of the reference scale information extracting process at step S2203 depicted in FIG. 22 is the same as the process procedure of the reference scale information extracting process depicted in FIG. 20 and therefore, will not be described. A process procedure of the image picture creating process at step S2204 depicted in FIG. 22 is the same as the process procedure of the image picture creating process depicted in FIG. 18 and therefore, will not be described.

As described above, the photographing apparatus 101 according to the second embodiment can identify based on the apparatus information of the photographing apparatus 101, the farm field Fi to be photographed among the farm fields F1 to Fn. The photographing apparatus 101 can acquire the reference scale information corresponding to a combination of the crop name and the growth stage of the crop cultivated in the farm field Fi to be photographed.

The work support method and the information providing method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

### EXPLANATIONS OF LETTERS OR NUMERALS

- 101: photographing apparatus
- 102: information providing apparatus
- 120: reference scale DB
- 200: work support system
- 201: client apparatus
- 210, 230: photographed image DBs
- 220: farm field DB
- 801: acquiring unit
- 802, 1504: transmitting unit
- 803, 1501: receiving unit
- 804: calculating unit
- 805: creating unit
- 806: output unit
- 807: display control unit
- 1502, 2101: identifying unit
- 1503, 2102: extracting unit

## Claims

1. A photographing apparatus comprising:
a photographing unit that photographs an object;
an acquiring unit that acquires dimension information that corresponds to a type of a given crop to be photographed, from a storage unit that stores for each type of crop, dimension information that indicates a dimension to be used as a comparison reference for the crop;
a creating unit that creates based on a photographing condition at the time of photographing of the given crop by the photographing unit and the acquired dimension information, a graphic image representative of the dimension to be used as the comparison reference for the given crop, on a photographed image taken by the photographing unit; and
an output unit that outputs the photographed image taken by the photographing unit and the created graphic image in a correlated manner.

2. The photographing apparatus according to claim 1, comprising
a first calculating unit that calculates based on the photographing condition at the time of photographing of the given crop, a ratio of an actual dimension of the object and a dimension of the object on the photographed image; and
a second calculating unit that calculates based on the calculated ratio and the acquired dimension information, the dimension to be used as the comparison reference for the given crop, on the photographed image, wherein
the creating unit creates based on the calculated dimension, the graphic image representative of the dimension to be used as the comparison reference for the given crop, on the photographed image.

3. The photographing apparatus according to claim 1 or 2, wherein
the storage unit stores for each combination of a type of a crop and a growth stage of the crop, the dimension information that indicates the dimension to be used as the comparison reference for the crop, and
the acquiring unit acquires from the storage unit, the dimension information that corresponds to a combination of the type of the given crop and a growth stage of the given crop.

4. The photographing apparatus according to any one of claims 1 to 3, comprising
a displaying unit that displays the object, and
a display control unit that displays on the displaying unit, the object together with the graphic image created by the creating unit.

5. The photographing apparatus according to claim 4, wherein
the display control unit superimposes and displays the photographed image and the graphic image on the displaying unit as a photographing result of the photographed image by the photographing unit.

6. The photographing apparatus according to claim 5, comprising
a changing unit that changes a display position of the graphic image on the photographed image, the graphic image being superimposed and displayed together with the photographed image by the display control unit, wherein
the output unit outputs in a correlated manner, the photographed image, the graphic image, and a changed display position of the graphic image on the photographed image after a change made by the changing unit.

7. The photographing apparatus according to any one of claims 1 to 6, comprising
an identifying unit that identifies a given farm field to be photographed among a farm field group; and
an extracting unit that extracts crop information that identifies the type of a crop cultivated in the identified given farm field, the crop information being extracted from a crop information storage unit that stores for each farm field of the farm field group, crop information identifying a type of a crop cultivated in the farm field, wherein
the acquiring unit acquires from the storage unit, the dimension information that corresponds to the type of the crop identified by the extracted crop information.

8. The photographing apparatus according to claim 7, wherein
the storage unit stores for each combination of a type of a crop and a growth stage of the crop, dimension information that indicates a dimension to be used as a comparison reference of the crop,
the crop information storage unit stores crop information that identifies for each farm field of the farm field group, a type of a crop cultivated in the field and a growth stage of the crop, and
the acquiring unit acquires from the storage unit, the dimension information corresponding to a combination of the type of the crop and the growth stage of the crop identified by the extracted crop information.

9. The photographing apparatus according to any one of claims 1 to 8, comprising
a transmitting unit that transmits to an information providing apparatus capable of accessing the storage unit, apparatus information that identifies the photographing apparatus, wherein
the acquiring unit, consequent to transmission of the apparatus information by the transmitting unit, acquires from the information providing apparatus, the dimension information that is among dimension information stored in the storage unit and that corresponds to the type of a crop cultivated in a farm field identified from the apparatus information.

10. The photographing apparatus according to claim 9, wherein
the storage unit stores for each combination of a type of the crop and a growth stage of the crop, the dimension information that indicates the dimension to be used as the comparison reference of the crop, and
the acquiring unit acquires consequent to transmission of the apparatus information by the transmitting unit and acquires from the information providing apparatus, the dimension information that is among dimension information stored in the storage unit and that corresponds to a combination of the type of the crop cultivated in the farm field identified from the apparatus information and the growth stage of the crop.

11. The photographing apparatus according to claim 9 or 10, comprising
a positional information acquiring unit that acquires positional information of the photographing apparatus, wherein
the transmitting unit transmits to the information providing apparatus, the apparatus information including the acquired positional information of the apparatus, and
the acquiring unit acquires consequent to transmission of the apparatus information by the transmitting unit and acquires from the information providing apparatus, the dimension information that is among dimension information group stored in the storage unit and that corresponds to the type of the crop cultivated in the farm field identified by the positional information of the photographing apparatus.

12. The photographing apparatus according to any one of claims 1 to 11, wherein
the dimension information includes a graphic image imitating a shape of the crop, and
the creating unit creates based on the graphic image included in the acquired dimension information, the graphic image representative of the dimension to be used as the comparison reference of the given crop, on the photographed image.

13. A work support program that causes a computer to execute a process comprising:
acquiring dimension information that corresponds to a type of a given crop to be photographed, from a storage unit that stores for each type of crop, dimension information that indicates a dimension to be used as a comparison reference for the crop;
creating based on a photographing condition at the time of photographing of the given crop by a photographing unit and the acquired dimension information, a graphic image representative of the dimension to be used as the comparison reference for the given crop, on a photographed image taken by the photographing unit; and
outputting the photographed image taken by the photographing unit and the created graphic image in a correlated manner.

14. An information providing method that is executed by a computer, the information providing method comprising:
receiving from a photographing apparatus, apparatus information that identifies the photographing apparatus;
extracting based on the received apparatus information and from a storage unit that stores for each type of crop, dimension information that indicates a dimension to be used as a comparison reference of the crop, dimension information that corresponds to a type of a given crop that is to be photographed by the photographing apparatus; and
transmitting the extracted dimension information to the photographing apparatus.

15. The information providing method according to claim 14, comprising
identifying among a farm field group and based on the received apparatus information, a given farm field that is to be photographed by the photographing apparatus; and
extracting crop information that identifies a type of a crop cultivated in the identified object farm, the crop information being extracted from a crop information storage unit that stores crop information that identifies for each farm field of the farm field group, a type of a crop cultivated in the farm field, wherein
the extracting of the dimension information, includes extracting from the storage unit, the dimension information that corresponds to the type of the crop identified by the extracted crop information.

16. The information providing method according to claim 15, wherein
the storage unit stores for each combination of a type of a crop and a growth stage of the crop, dimension information that indicates the dimension to be used as the comparison reference of the crop,
the crop information storage unit stores crop information that identifies for each farm field of the farm field group, the type of a crop cultivated in the farm field and a growth stage of the crop, and
the extracting of the dimension information includes extracting from the storage unit, the dimension information that corresponds to a combination of the type of the crop and the growth stage of the crop identified by the extracted crop information.

17. An information providing program that causes a computer to execute a process comprising:
receiving from a photographing apparatus, apparatus information that identifies the photographing apparatus;
extracting based on the received apparatus information and from a storage unit that stores for each type of crop, dimension information that indicates a dimension to be used as a comparison reference of the crop, dimension information that corresponds to a type of a given crop that is to be photographed by the photographing apparatus; and
transmitting the extracted dimension information to the photographing apparatus.
